# EUROPEAN PATENT APPLICATION

(11) **EP 4 815 597 A1**
(43) Date of publication of application: **30.09.2026**
(21) Application number: 24893521.5
(22) Date of filing: 21.11.2024
(51) Int. Cl.: H04W 72/20

(54) **INFORMATION PROCESSING METHOD AND APPARATUS, AND READABLE STORAGE MEDIUM**

(30) Priority: 24.11.2023 CN 202311579880
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN); LI, Shupeng, Beijing 100085 (CN)
(74) Representative: Studio Torta S.p.A.
(86) International application number: PCT/CN2024/133481
(87) International publication number: WO 2025/108366

(57) **Abstract**

The present disclosure discloses information processing methods, information processing apparatuses, and readable storage media, relating to the technical field of communications. The method includes: determining, according to first information, whether to transmit a first uplink transmission or not to transmit a first uplink transmission on a first symbol; wherein the first symbol is one or more SBFD symbols within symbols configured for where one or more SSBs are located.

## Description

### CROSS-REFERENCE TO RELATED APPLICATION

This application claims a priority of the Chinese patent application No. 202311579880.8, titled "information processing methods, information processing apparatuses, and readable storage media" and filed on November 24, 2023, which is incorporated herein by reference in its entirety.

### TECHNICAL FIELD

The present disclosure relates to the technical field of communication, and in particular, to information processing methods, information processing apparatuses, and readable storage media.

### BACKGROUND

In related technologies, a research direction of sub-band full duplex (SBFD) is proposed, in which frequency domain resources are divided into a plurality of sub-bands that do not overlap with each other, and uplink and downlink frequency domain resources are respectively located in different sub-bands.

A symbol containing uplink/downlink sub-bands may be referred to as an SBFD symbol. For a Synchronization Signal and Physical Broadcast Channel (PBCH) block (SSB) symbol configured as an SBFD symbol. How a terminal transmits a first uplink transmission on an uplink sub-band to reduce interference to SSB measurement is a technical problem that needs to be solved.

### SUMMARY

An object of the present disclosure is to provide an information processing method, an information processing apparatus and readable storage media, so as to reduce interference to SSB measurement caused by uplink transmission.

In a first aspect, an embodiment of the present disclosure provides an information processing method, which is applied to a terminal, including:
determining first information; and
determining transmission of first uplink transmission or no transmission of first uplink transmission on a first symbol, in accordance with the first information,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information includes at least one of:
   first transmission type;
   first resource information.

In a second aspect, another embodiment of the present disclosure provides an information processing method, which is applied to a network device, including:
transmitting first information to a terminal, wherein the first information is used to determine transmission of first uplink transmission or no transmission of first uplink transmission on a first symbol,
wherein the first symbol is one or more SBFD symbols within symbols configured for where one or more SSBs are located;
wherein the first information includes first resource information.

In a third aspect, another embodiment of the present disclosure provides an information processing apparatus, which is applied to a terminal, the information processing apparatus comprising a memory, a transceiver and a processor,
wherein the memory is configured to store therein a computer program, and the transceiver is configured to transmit and receive data under the control of the processor, wherein the processor is configured to read the computer program in the memory so as to:
determine first information; and
determine transmission of first uplink transmission or no transmission of first uplink transmission on a first symbol, in accordance with the first information,
wherein the first symbol is one or more SBFD symbols within symbols configured for where one or more SSBs are located;
wherein the first information includes at least one of:
   first transmission type;
   first resource information.

In a fourth aspect, another embodiment of the present disclosure provides an information processing apparatus, which is applied to a network device, the information processing apparatus comprising a memory, a transceiver and a processor,
wherein the memory is configured to store therein a computer program, and the transceiver is configured to transmit and receive data under the control of the processor, wherein the processor is configured to read the computer program in the memory, so as to:
transmit first information to a terminal, wherein the first information is used to determine transmission of first uplink transmission or no transmission of first uplink transmission on a first symbol,
wherein the first symbol is one or more SBFD symbols within symbols configured for where one or more SSBs are located;
wherein the first information includes first resource information.

In a fifth aspect, another embodiment of the present disclosure provides an information processing apparatus, which is applied to a terminal, including:
a first determining unit, configured to determine first information; and
a second determining unit, configured to determine transmission of first uplink transmission or no transmission of first uplink transmission on a first symbol, in accordance with the first information,
wherein the first symbol is one or more SBFD symbols within symbols configured for where one or more SSBs are located;
wherein the first information includes at least one of:
   first transmission type;
   first resource information.

In a sixth aspect, another embodiment of the present disclosure provides an information processing apparatus, which is applied to a network device, including:
a first transmitting unit, configured to transmit first information to a terminal, wherein the first information is used to determine transmission of first uplink transmission or no transmission of first uplink transmission on a first symbol,
wherein the first symbol is one or more SBFD symbols within symbols configured for where one or more SSBs are located;
wherein the first information includes first resource information.

In a seventh aspect, another embodiment of the present disclosure provides a processor-readable storage medium storing therein a computer program, wherein the computer program is executed by a processor so as to implement the steps of the above-mentioned methods.

In the above embodiments of the present disclosure, it is determined whether or not to transmit a first uplink transmission on one or more SBFD symbols configured for where one or more SSBs are located in accordance with the first information, so as to reduce interference to SSB measurement.

### BRIEF DESCRIPTION OF THE DRAWINGS

FIG. 1 is a first flowchart of an information processing method provided by an embodiment of the present disclosure;
FIG. 2 is a second flowchart of an information processing method provided by an embodiment of the present disclosure;
FIG. 3 is a schematic diagram of a process in an embodiment of the present disclosure;
FIG. 4 is a schematic diagram of another process in an embodiment of the present disclosure;
FIG. 5 is a first structural diagram of an information processing apparatus provided by an embodiment of the present disclosure;
FIG. 6 is a second structural diagram of an information processing apparatus provided by an embodiment of the present disclosure;
FIG. 7 is a third structural diagram of an information processing apparatus provided by an embodiment of the present disclosure; and
FIG. 8 is a fourth structural diagram of an information processing apparatus provided by an embodiment of the present disclosure.

### DETAILED DESCRIPTION

The term "and/or" in the embodiments of the present disclosure describes an association relationship of associated objects, indicating that three relationships may exist. For example, A and/or B may indicate: A exists alone, both A and B exist, and B exists alone. The character "/" generally indicates an "or" relationship between the preceding and succeeding associated objects.

The term "a plurality of" in the embodiments of the present disclosure refers to two or more, and other quantifiers are similar thereto.

The technical solutions in the embodiments of the present disclosure will be clearly and completely described below with reference to the accompanying drawings in the embodiments of the present disclosure. Apparently, the described embodiments are only some of the embodiments of the present disclosure, rather than all of them. All other embodiments obtained by a person of ordinary skill in the art based on the embodiments of the present disclosure without creative efforts shall fall within the protection scope of the present disclosure.

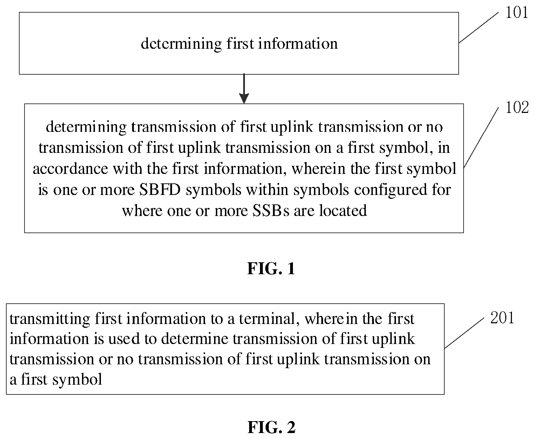

Referring to FIG. 1, FIG. 1 is a flowchart of an information processing method provided by an embodiment of the present disclosure, which is applied to a terminal. As shown in FIG. 1, the method includes the following steps:
Step 101: determining first information.

The first information includes at least one of:
a first transmission type, referring to a transmission type of a first uplink transmission transmitted on a first symbol;
first resource information, referring to resource information related to the first uplink transmission transmitted on the first symbol.

Herein, the first symbol is one or more SBFD symbols among symbols configured for where one or more SSBs are located.

In the embodiments of the present disclosure, the first information may be determined in a plurality of ways.

Mode 1: the terminal determines the first information in accordance with certain protocol(s).

In some embodiments, the first information includes a first transmission type, wherein the first transmission type includes at least one of:
one or more among (i) single-slot PUSCH scheduled by DCI, (ii) multiple-slot PUSCH scheduled by DCI, (iii) multiple-PUSCH transmission scheduled by DCI, (iv) a first PUSCH transmission of multiple-PUSCH transmission scheduled by DCI, (v) repetition PUSCH transmission scheduled by DCI, (vi) a first PUSCH transmission of repetition PUSCH transmission scheduled by DCI, or (vii) Physical Uplink Control Channel (PUCCH) scheduled by DCI;
Aperiodic CSI Reporting activated or triggered by DCI and/or Semi-Persistent CSI Reporting transmitted on PUSCH;
Configured Grant (CG) Type-2 PUSCH and/or a first transmission opportunity of CG Type-2 PUSCH.

Herein, the first transmission opportunity of CG Type-2 PUSCH includes at least one of the following:
a first transmission slot of the CG period determined in accordance with an activated DCI;
a first transmission of a first Transmission Block (TB) of the CG period determined in accordance with the activated DCI, for example, from a first transmission slot to a consecutive N-th transmission slot;
all repetition transmissions of the first TB of the CG period determined in accordance with the activated DCI, for example, from a first transmission slot to a consecutive N*K-th transmission slot or valid transmission slots.

Herein, N is the number of slots used for mapping one TB, and K is the number of repetitions for one TB.

In some embodiments, the first information includes first resource information, wherein the first resource information includes a first frequency domain offset threshold, which is a minimum frequency domain offset value between frequency domain resource(s) of the first uplink transmission and frequency domain resource(s) of the one or more SSBs.

Mode 2: the first information includes first resource information. The terminal obtains first indication information from a network device (e.g., a base station), and determines the first information in accordance with the first indication information.

Herein, the first resource information includes at least one of:
time domain resource information, which is used to indicate the first symbol for transmitting uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

The time domain resource information may be indicated by means of an SSB index, a slot index, a symbol index, etc.; the frequency domain resource information may be indicated by means of a Resource Block (RB), a Resource Block Group (RBG), etc.; and the spatial domain resource information may be indicated by means of a reference signal index, etc.

Mode 3: the first information includes the first transmission type and the first resource information. The terminal determines the first transmission type in accordance with certain protocol(s). The terminal obtains first indication information from a network device, and determines the first resource information in accordance with the first indication information, wherein the first indication information is used to indicate the first resource information.

Step 102: determining transmission of first uplink transmission or no transmission of first uplink transmission on a first symbol, in accordance with the first information.

In the embodiments of the present disclosure, the first uplink transmission includes at least one of the following: PUSCH, PUCCH, Physical Random Access Channel (PRACH), or an uplink reference signal.

For the different ways of determining the first information mentioned above, the terminal also has different ways to determine whether to transmit the first uplink transmission on the first symbol in this step.

Corresponding to Mode 1, if the first information includes the first transmission type, the terminal may determine whether to transmit the first uplink transmission on the first symbol in the following manner:
obtaining second indication information from the network device, wherein the second indication information is used to indicate the terminal to transmit the first uplink transmission; determining transmission of the first uplink transmission on the first symbol, in case that a transmission type of the first uplink transmission is one of the first transmission type; or,
obtaining second indication information from the network device, wherein the second indication information is used to indicate the terminal to transmit the first uplink transmission; determining no transmission of the first uplink transmission on the first symbol, in case that a transmission type of the first uplink transmission is not one of the first transmission type.

That is, in this manner, when the first uplink transmission indicated by the network device to be transmitted by the terminal as one of the first transmission type, the terminal determines to transmit the first uplink transmission on the first symbol; otherwise, it determines not to transmit the first uplink transmission. Alternatively, the terminal does not expect the network device to indicate any other transmission types other than those included in the first transmission type on the first symbol; that is, the network device is not supported to configure other transmission types on the first symbol than those included in the first transmission type.

Herein, transmitting the first uplink transmission on the first symbol refers to transmitting the first uplink transmission on an uplink sub-band of the first symbol.

Corresponding to Mode 1, if the first information includes the first resource information, the terminal may determine whether to transmit the first uplink transmission on the first symbol in the following manner:
obtaining third indication information from the network device, wherein the third indication information is used to indicate the terminal to transmit the first uplink transmission; determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold; or,
obtaining third indication information from the network device, wherein the third indication information is used to indicate the terminal to transmit the first uplink transmission; determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold.

Corresponding to Mode 1, if the first information includes the first resource information, the terminal may also determine whether to transmit the first uplink transmission on the first symbol in combination with SSB measurement configuration information in the following manner:
obtaining fourth indication information from the network device, wherein the fourth indication information is used to indicate the terminal to transmit the first uplink transmission; obtaining SSB measurement configuration information from the network device; determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold and SSB measurement is determined not to be carried out in accordance with the SSB measurement configuration information; or,
obtaining fourth indication information from the network device, wherein the fourth indication information is used to indicate the terminal to transmit the first uplink transmission; obtaining SSB measurement configuration information from the network device; determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold and/or SSB measurement is determined to be carried out in accordance with the SSB measurement configuration information.

It should be noted that in the embodiments of the present disclosure, when "the frequency domain offset value between the frequency domain resource(s) of the first uplink transmission and the frequency domain resource(s) of the one or more SSBs is equal to the first frequency domain offset threshold", the specific implementation is to determine transmission of the first uplink transmission or to determine no transmission of the first uplink transmission, i.e., there will not be a case where both transmission and no transmission are determined.

Corresponding to Mode 2, the terminal may determine whether to transmit the first uplink transmission on the first symbol in the following manner:
obtaining fifth indication information from the network device, wherein the fifth indication information is used to indicate the terminal to transmit the first uplink transmission; determining transmission of the first uplink transmission on the first symbol, in case that resource(s) corresponding to the first uplink transmission is within a range indicated by the first resource information; or,
obtaining fifth indication information from the network device, wherein the fifth indication information is used to indicate the terminal to transmit the first uplink transmission; determining no transmission of the first uplink transmission on the first symbol, in case that resource(s) corresponding to the first uplink transmission is not within the range indicated by the first resource information.

Corresponding to Mode 2, if the first resource information includes the frequency domain resource information and/or the spatial domain resource information, the terminal may also determine whether to transmit the first uplink transmission on the first symbol in combination with SSB measurement configuration information in the following manner:
obtaining fifth indication information from the network device, wherein the fifth indication information is used to indicate the terminal to transmit the first uplink transmission; obtaining SSB measurement configuration information from the network device; determining transmission of the first uplink transmission on the first symbol, in case that resource(s) corresponding to the first uplink transmission is within a range indicated by the first resource information and SSB measurement is determined not to be carried out in accordance with the SSB measurement configuration information; or,
obtaining fifth indication information from the network device, wherein the fifth indication information is used to indicate the terminal to transmit the first uplink transmission; obtaining SSB measurement configuration information from the network device; determining no transmission of the first uplink transmission on the first symbol, in case that resource(s) corresponding to the first uplink transmission is not within the range indicated by the first resource information and/or SSB measurement is determined to be carried out in accordance with the SSB measurement configuration information.

In the implementation process corresponding to Mode 2, if the first resource information includes frequency domain resource information, that the resource(s) corresponding to the first uplink transmission is within the range indicated by the first resource information includes at least one of the following:
the frequency domain resource(s) corresponding to the first uplink transmission is within a frequency domain resource set for transmitting the first uplink transmission, which is indicated by the first resource information;
a frequency domain offset value between frequency domain resource(s) corresponding to the first uplink transmission and frequency domain resource(s) of the one or more SSBs is greater than or equal to the second frequency domain offset threshold.

Herein, the frequency domain resource(s) corresponding to the first uplink transmission may include all or part of the frequency domain resource(s) corresponding to the first uplink transmission.

Corresponding to Mode 3, the terminal may determine whether to transmit the first uplink transmission on the first symbol in the following manner:
obtaining sixth indication information from the network device, wherein the sixth indication information is used to indicate the terminal to transmit the first uplink transmission; determining transmission of the first uplink transmission on the first symbol, in case that a transmission type of the first uplink transmission is one of the first transmission type and resource(s) corresponding to the first uplink transmission is within a range indicated by the first resource information; or,
obtaining sixth indication information from the network device, wherein the sixth indication information is used to indicate the terminal to transmit the first uplink transmission; determining no transmission of the first uplink transmission on the first symbol, in case that a transmission type of the first uplink transmission is not one of the first transmission type and/or resource(s) corresponding to the first uplink transmission is not within the range indicated by the first resource information.

In the above, the resource(s) corresponding to the first uplink transmission is(are) within the range indicated by the first resource information, when the first resource information includes the frequency domain resource information, includes at least one of the following:
the frequency domain resource(s) corresponding to the first uplink transmission is(are) within a frequency domain resource set for transmitting the first uplink transmission, which is indicated by the first resource information;
a frequency domain offset value between frequency domain resource(s) corresponding to the first uplink transmission and frequency domain resource(s) of the one or more SSBs is greater than or equal to the second frequency domain offset threshold.

Herein, the frequency domain resource(s) corresponding to the first uplink transmission may include all or part of the frequency domain resource(s) corresponding to the first uplink transmission.

In the embodiments of the present disclosure, it can be determined whether to transmit the first uplink transmission on the SBFD symbol configured within the symbol where the SSB is located in accordance with the first information, thereby reducing interference to the SSB measurement and avoiding conflicts between the first uplink transmission and the SSB measurement.

Referring to FIG. 2, FIG. 2 is a flowchart of an information processing method provided by an embodiment of the present disclosure, which is applied to a network device. As shown in FIG. 2, the method includes the following steps:

Step 201: transmitting first information to a terminal, wherein the first information is used to determine transmission of first uplink transmission or no transmission of first uplink transmission on a first symbol.

Herein, the first symbol is one or more SBFD symbols within symbols configured for where one or more SSBs are located; the first information includes first resource information.

In the embodiments of the present disclosure, the first uplink transmission includes at least one of the following: PUSCH, PUCCH, PRACH, or an uplink reference signal.

Herein, the first resource information includes at least one of:
time domain resource information, which is used to indicate the first symbol for transmitting the uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

Optionally, in the embodiments of the present disclosure, the time domain resource information may be indicated by means of an SSB index, a slot index, a symbol index, etc.; the frequency domain resource information may be indicated by means of an RB, an RBG, etc.; and the spatial domain resource information may be indicated by means of a reference signal index, etc.

In the embodiments of the present disclosure, it can be determined whether to transmit the first uplink transmission on the SBFD symbol configured within the symbol where the SSB is located in accordance with the first information, thereby reducing interference to the SSB measurement and avoiding conflicts between the first uplink transmission and the SSB measurement.

Optionally, in the embodiments of the present disclosure, the network device may further transmit to the terminal second indication information, or third indication information, or fourth indication information, or fifth indication information, or sixth indication information, wherein the second indication information, or the third indication information, or the fourth indication information, or the fifth indication information, or the sixth indication information is used to indicate the terminal to transmit the first uplink transmission.

Optionally, in the embodiments of the present disclosure, the network device may further transmit SSB measurement configuration information to the terminal, which is used for the terminal to determine whether to transmit the first uplink transmission on the first symbol.

The implementation process of the embodiments of the present disclosure is described in detail below in conjunction with different embodiments. Among them, the network device is described by taking a base station as an example.

In the embodiments of the present disclosure, for the solution in which Mode 1 determines the first transmission type by protocol(s), the specific implementation process is as follows.

The base station indicates the terminal to transmit the first uplink transmission on the first symbol. The terminal determines whether to transmit the first uplink transmission on the first symbol in accordance with the first uplink transmission and the transmission type specified by the protocol(s). If the first uplink transmission indicated by the base station belongs to the transmission type specified by the protocol(s), the terminal transmits the first uplink transmission on the first symbol; otherwise, the terminal does not transmit the first uplink transmission on the first symbol. The transmission types specified by the protocol(s) may refer to the descriptions of the foregoing embodiments.

For example, if the base station indicates the terminal to transmit CG Type-1 PUSCH on the first symbol, and CG Type-1 PUSCH is not included in the transmission types specified by the protocol(s), the terminal determines not to transmit CG Type-1 PUSCH on the first symbol. For example, if the base station indicates the terminal to transmit the first repetition transmission of repetition PUSCH on the first symbol, and the transmission types specified by the protocol(s) include the first repetition transmission of repetition PUSCH, the terminal determines to transmit the first repetition transmission of repetition PUSCH on the first symbol.

In some embodiments, the protocol(s) may further specify that the terminal does not expect the base station to indicate to transmit other types on the first symbol other than the specified types mentioned above.

Through the above method, the base station can avoid or mitigate interference caused by the uplink transmission of the terminal to SSB measurements of other terminals based on implementation or scheduling, and can also avoid conflicts between the uplink transmission of one terminal and the SSB measurement based on implementation or scheduling. Through the above method, the uplink transmission on the first symbol indicated by the base station can also be overridden, that is, the terminal no longer transmits the first uplink transmission, thereby avoiding the impact of the first uplink transmission on the SSB measurements of itself or other terminals.

In the embodiments of the present disclosure, for the solution in Mode 1 in which the first frequency domain offset threshold is specified by protocol(s), the specific implementation process is as follows.

The protocol(s) specifies the first frequency domain offset threshold, for example, the first frequency domain offset threshold is K number of RBs, where the value of K can be defined differently according to different subcarrier spacings, and K is an integer.

The protocol(s) specifies that when the frequency domain offset between the uplink transmission indicated by the base station and the SSB is greater than or equal to the first frequency domain offset threshold, the terminal determines to transmit the first uplink transmission; otherwise, the terminal determines not to transmit the first uplink transmission.

For example, if the minimum value of RB indices occupied by one or more SSBs is greater than the maximum value of RB indices corresponding to the uplink transmission, and the difference between the minimum value and the maximum value is greater than or equal to the first frequency domain offset threshold, and, if the maximum value of RB indices occupied by one or more SSBs is greater than the minimum value of RB indices corresponding to the uplink transmission, and the difference between the minimum value and the maximum value is greater than or equal to the first frequency domain offset threshold, the terminal determines to transmit the first uplink transmission; otherwise, the terminal determines not to transmit the first uplink transmission.

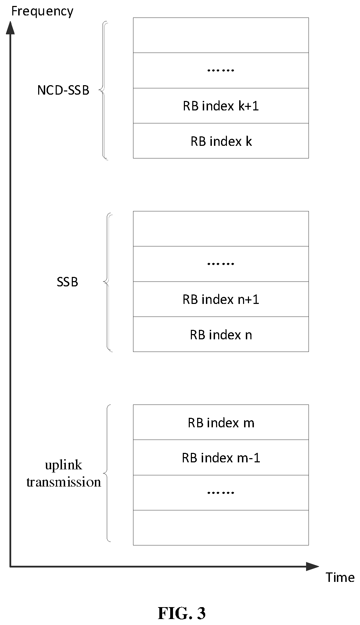

Specifically, for example, as shown in FIG. 3, the figure includes two SSBs, i.e., one Non Cell Defining SSB (NCD-SSB) and one SSB, and there is an SSB only on one side of the uplink transmission. When the minimum value n of the RB indices occupied by the two SSBs is greater than the maximum value m of the RB indices corresponding to the uplink transmission, and the difference between n and m is greater than the first frequency domain offset threshold, the terminal determines to transmit the uplink transmission; otherwise, the terminal determines not to transmit the uplink transmission.

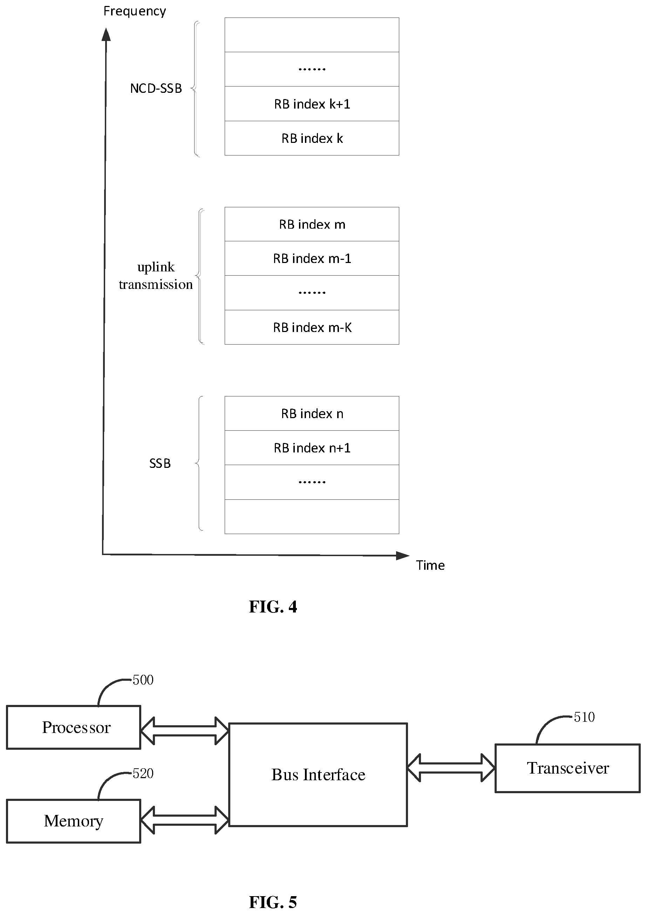

For example, as shown in FIG. 4, the figure includes two SSBs, i.e., one NCD-SSB and one SSB. At this time, there are SSBs on both sides of the uplink transmission. In this case, the minimum value k of the RB indices occupied by the NCD-SSB is greater than the maximum value m of the RB indices corresponding to the uplink transmission, and the difference between k and m is greater than the first frequency domain offset threshold, and the maximum value n of the RB indices occupied by the NCD-SSB is less than the minimum value m-K of the RB indices corresponding to the uplink transmission, and the difference between m-K and n is greater than the first frequency domain offset threshold. At this time, the terminal determines to transmit the uplink transmission; otherwise, the terminal determines not to transmit the uplink transmission.

In the embodiments of the present disclosure, for the solution in Mode 2 in which the base station provides indication, the specific implementation process is as follows.

The base station indicates the first resource information to the terminal, and the base station indicates the terminal to transmit the first uplink transmission on the first symbol. The terminal determines the first resource(s) according to the first resource information, and determines the resource(s) corresponding to the first uplink transmission according to the indication of the base station.

The terminal determines whether to transmit the first uplink transmission on the first symbol according to the first resource and the resource information corresponding to the first uplink transmission. Specific embodiments are as follows.

For example, the first resource information includes time, frequency, and/or spatial domain resources (beam direction). The time domain resource is the first symbol that can be used for transmitting uplink transmission, the frequency domain resource is the frequency domain resource on the first symbol that can be used for transmitting uplink transmission, and the spatial domain resource is the spatial domain resource (beam direction) on the first symbol that can be used for transmitting uplink transmission. When the resource(s) corresponding to the first uplink transmission are all within the first resource range, the terminal determines to transmit the first uplink transmission on the first symbol; otherwise, the terminal determines not to transmit the first uplink transmission.

For example, the first resource includes time and/or frequency domain resources, the time domain resource is the first symbol that can be used for transmitting uplink transmission, the frequency domain resource is the frequency domain resource on the first symbol that can be used for transmitting uplink transmission. If part of the time and/or frequency domain resources corresponding to the first uplink transmission is within the first resource range, the terminal determines not to transmit the first uplink transmission.

For example, the first resource includes time and/or frequency domain resources, the time domain resource is the first symbol that can be used for transmitting uplink transmission, the frequency domain resource is the frequency domain resource on the first symbol that can be used for transmitting uplink transmission. If part of the time and/or frequency domain resources corresponding to the first uplink transmission is within the first resource range, at this time, the terminal determines to transmit the first uplink transmission on the first symbol; otherwise, the terminal determines not to transmit the first uplink transmission. The terminal performs rate matching on a second resource, wherein the second resource is the overlapping part of the time and/or frequency domain resources corresponding to the first uplink transmission and the first resource.

For example, the first resource includes spatial domain resources (beam direction). If the spatial domain resources (beam direction) corresponding to the first uplink transmission are within the first resource range, at this time, the terminal determines to transmit the first uplink transmission on the first symbol; otherwise, the terminal determines not to transmit the first uplink transmission.

In some embodiments, the terminal may further determine whether to transmit the first uplink transmission on the first symbol according to the first resource information, the SSB measurement configuration information, and the resource(s) corresponding to the first uplink transmission. The first resource information includes frequency domain resource information and/or spatial domain resource information. When the frequency and/or spatial domain resources corresponding to the first uplink transmission are within the frequency range indicated by the first resource information, and the terminal determines not to perform SSB measurement on the time domain resource corresponding to the first uplink transmission according to the SSB measurement configuration information, the terminal determines to transmit the first uplink transmission on the first symbol; otherwise, the terminal determines not to transmit the first uplink transmission.

Herein, that the frequency domain resource corresponding to the first uplink transmission is within the frequency range indicated by the first resource information includes: the first resource indication information indicates a set of frequency domain resources on which the first uplink transmission can be transmitted on the first symbol, and the frequency domain resource corresponding to the first uplink transmission is included in the set; or, the first resource indication information indicates a second frequency domain offset threshold, and the frequency domain offset between the frequency domain resource corresponding to the first uplink transmission and the SSB is greater than or equal to the second frequency domain offset threshold. That part of the frequency domain resources corresponding to the first uplink transmission is within the first resource range includes: the first resource indication information indicates a set of frequency domain resources on which the first uplink transmission can be transmitted on the first symbol, and part of the frequency domain resources corresponding to the first uplink transmission is included in the set; or, the first resource indication information indicates a frequency domain offset threshold value, and the frequency domain offset between part of the frequency domain resources corresponding to the first uplink transmission and the SSB is greater than or equal to the second frequency domain offset threshold.

Through the solution of the embodiments of the present disclosure, interference to SSB measurements of other terminals can be avoided or reduced, and conflicts between uplink transmission and SSB measurement of the terminal can also be avoided.

The technical solutions provided by the embodiments of the present disclosure may be applicable to various systems, especially the 5th Generation (5G) or 6G systems. For example, applicable systems may be Global System of Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), LTE-Advanced (LTE-A), Universal Mobile Telecommunication System (UMTS), Worldwide Interoperability for Microwave Access (WiMAX), 5G New Radio (NR) system, etc. These various systems all include terminal devices and network devices. The systems may also include a core network part, such as Evolved Packet System (EPS), 5G System (5GS), etc.

Terminal devices involved in the embodiments of the present disclosure may refer to devices providing voice and/or data connectivity to users, handheld devices with wireless connection functions, or other processing devices connected to wireless modems. In different systems, the names of terminal devices may also be different. For example, in 5G systems, terminal devices may be referred to as User Equipment (UE). Wireless terminal devices can communicate with one or more Core Networks (CN) through a Radio Access Network (RAN). Wireless terminal devices can be mobile terminal devices, such as mobile phones (or "cellular" phones) and computers with mobile terminal devices, for example, they can be portable, pocket-sized, hand-held, computer-built-in, or vehicle-mounted mobile devices, which exchange voice and/or data with the RAN. For example, Personal Communication Service (PCS) phones, cordless phones, Session Initiation Protocol (SIP) phones, Wireless Local Loop (WLL) stations, Personal Digital Assistant (PDA), and other devices. Wireless terminal devices may also be called systems, subscriber units, subscriber stations, mobile stations, mobiles, remote stations, access points, remote terminals, access terminals, user terminals, user agents, or user devices, which are not limited in the embodiments of the present disclosure.

Network devices involved in the embodiments of the present disclosure may be base stations, and the base stations may include a plurality of cells providing services for terminals. Depending on the specific application occasion, the base station may also be referred to as an access point, or may be a device in the access network that communicates with wireless terminal devices through one or more sectors on the air interface, or other names. The network device can be used to mutually exchange received over-the-air frames with Internet Protocol (IP) packets, and serve as a router between the wireless terminal device and the rest of the access network, where the rest of the access network may include an IP communication network. The network device can also coordinate attribute management of the air interface. For example, the network device involved in the embodiments of the present disclosure may be a Base Transceiver Station (BTS) in Global System for Mobile communications (GSM) or Code Division Multiple Access (CDMA), or a NodeB in Wide-band Code Division Multiple Access (WCDMA), or an evolutional Node B (eNB or e-NodeB) in Long Term Evolution (LTE) system, or a 5G base station (gNB) in 5G next generation system, or a Home evolved Node B (HeNB), a relay node, a femto, a pico, etc., which are not limited in the embodiments of the present disclosure. In some network architectures, the network device may include a Centralized Unit (CU) node and a Distributed Unit (DU) node, and the CU and DU may also be arranged separately geographically.

Multi-Input Multi-Output (MIMO) transmission can be performed between the network device and the terminal device using one or more antennas respectively. MIMO transmission can be Single User MIMO (SU-MIMO) or Multiple User MIMO (MU-MIMO). According to the shape and number of antenna combinations, MIMO transmission can be 2-Dimensional MIMO (2D-MIMO), 3-Dimensional MIMO (3D-MIMO), Full Dimension MIMO (FD-MIMO), or massive-MIMO, and can also be diversity transmission, precoding transmission, or beamforming transmission.

As shown in FIG. 5, the information processing apparatus of an embodiment of the present disclosure, which is applied to a network device, includes a processor 500, configured to read the program in the memory 520 to implement the following process:
transmitting first information to a terminal, wherein the first information is used to determine transmission of first uplink transmission or no transmission of first uplink transmission on a first symbol;
wherein the first symbol is one or more SBFD symbols within symbols configured for where one or more SSBs are located; the first information includes first resource information.

A transceiver 510 is configured to receive and transmit data under the control of the processor 500.

In FIG. 5, the bus architecture may include any number of interconnected buses and bridges, specifically various circuits of one or more processors represented by the processor 500 and the memory represented by the memory 520 linked together. The bus architecture may also link together various other circuits such as peripheral devices, voltage regulators, and power management circuits, which are well known in the art and therefore will not be further described herein. The bus interface provides an interface. The transceiver 510 may be a plurality of elements, i.e., including a transmitter and a receiver, providing a unit for communicating with various other apparatuses over a transmission medium. The processor 500 is responsible for managing the bus architecture and general processing, and the memory 520 can store data used by the processor 500 when performing operations.

The processor 500 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 500 is responsible for managing the bus architecture and general processing, and the memory 520 can store data used by the processor 500 when performing operations.

In some embodiments, the first resource information includes at least one of:
time domain resource information, which is used to indicate the first symbol for transmitting the uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

In some embodiments, the processor 500 is further configured to read the program to implement the following step:
transmitting to the terminal second indication information, or third indication information, or fourth indication information, or fifth indication information, or sixth indication information, wherein the second indication information, or the third indication information, or the fourth indication information, or the fifth indication information, or the sixth indication information is used to indicate the terminal to transmit the first uplink transmission.

In some embodiments, the processor 500 is further configured to read the program to implement the following step:
transmitting SSB measurement configuration information to the terminal.

In some embodiments, the first uplink transmission includes at least one of the following: PUSCH, PUCCH, PRACH, or an uplink reference signal.

It should be noted here that the above-mentioned apparatus provided by the embodiments of the present disclosure can implement all the method steps implemented by the above-mentioned method embodiments and can achieve the same technical effects. The parts in this embodiment that are the same as those in the method embodiments and the beneficial effects will not be specifically described again.

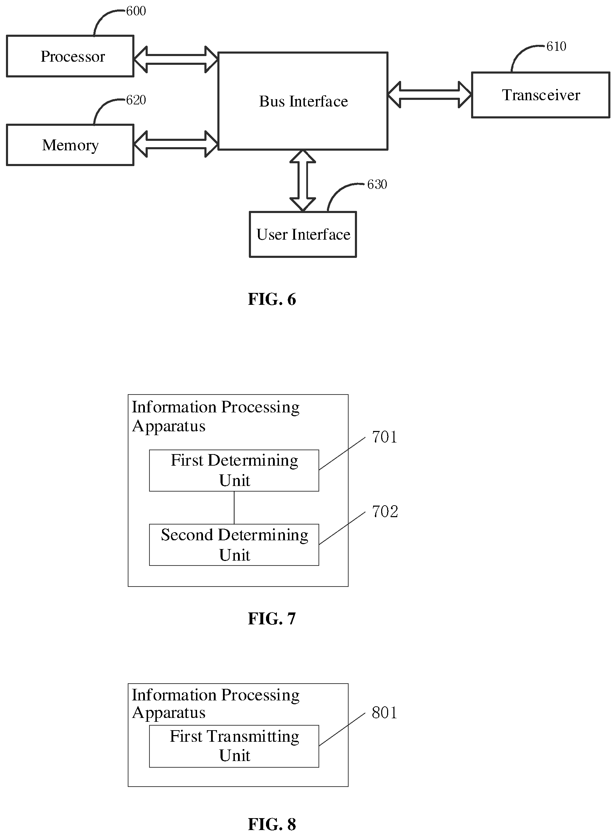

As shown in FIG. 6, the information processing apparatus of an embodiment of the present disclosure, which is applied to a terminal, includes a processor 600, configured to read the program in the memory 620 to implement the following process:
determining first information;
determining transmission of first uplink transmission or no transmission of first uplink transmission on a first symbol, in accordance with the first information;
wherein the first symbol is one or more SBFD symbols within symbols configured for where one or more SSBs are located; the first information includes at least one of: first transmission type; first resource information.

A transceiver 610 is configured to receive and transmit data under the control of the processor 600.

In FIG. 6, the bus architecture may include any number of interconnected buses and bridges, specifically various circuits of one or more processors represented by the processor 600 and the memory represented by the memory 620 linked together. The bus architecture may also link together various other circuits such as peripheral devices, voltage regulators, and power management circuits, which are well known in the art and therefore will not be further described herein. The bus interface provides an interface. The transceiver 610 may be a plurality of elements, i.e., including a transmitter and a receiver, providing a unit for communicating with various other apparatuses over a transmission medium. For different user equipment, the user interface 630 may also be an interface capable of externally or internally connecting to required devices, and the connected devices include but are not limited to a keypad, a display, a speaker, a microphone, a joystick, etc.

The processor 600 is responsible for managing the bus architecture and general processing, and the memory 620 can store data used by the processor 600 when performing operations.

The processor 600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is used to implement any of the methods provided by the embodiments of the present disclosure by calling the computer program stored in the memory and according to the obtained executable instructions. The processor and the memory may also be arranged physically separately.

In some embodiments, the processor 600 is further configured to read the program to implement the following step: determining the first information in accordance with certain protocol(s).

In some embodiments, the first information includes the first resource information; the processor 600 is further configured to read the program to implement the following steps:
obtaining first indication information from the network device, wherein the first indication information is used to indicate the first resource information; and
determining the first information in accordance with the first indication information.

In some embodiments, the first information includes the first transmission type and the first resource information; the processor 600 is further configured to read the program to implement the following steps:
determining the first transmission type in accordance with certain protocol(s); and
obtaining first indication information from the network device, and determining the first resource information in accordance with the first indication information, wherein the first indication information is used to indicate the first resource information.

In some embodiments, the first transmission type includes at least one of:
one or more among (i) single-slot Physical Uplink Shared Channel (PUSCH) scheduled by Downlink Control Information (DCI), (ii) multiple-slot PUSCH scheduled by DCI, (iii) multiple-PUSCH transmission scheduled by DCI (iv) a first PUSCH transmission of multiple-PUSCH transmission scheduled by DCI, (v) repetition PUSCH transmission scheduled by DCI, (vi) a first PUSCH transmission of repetition PUSCH transmission scheduled by DCI, or (vii) Physical Uplink Control Channel (PUCCH) scheduled by DCI;
Aperiodic CSI Reporting activated or triggered by DCI and/or Semi-Persistent CSI Reporting transmitted on PUSCH;
Configured Grant (CG) Type-2 PUSCH and/or a first transmission opportunity of CG Type-2 PUSCH.

In some embodiments, the first transmission opportunity of CG Type-2 PUSCH includes at least one of the following:
a first transmission slot of the CG period determined in accordance with an activated DCI;
a first transmission of a first Transmission Block (TB) of the CG period determined in accordance with the activated DCI;
all repetition transmissions of the first TB of the CG period determined in accordance with the activated DCI.

In some embodiments, the first information includes the first transmission type; the processor 600 is further configured to read the program to implement the following steps:
obtaining second indication information from the network device, wherein the second indication information is used to indicate the terminal to transmit the first uplink transmission; and determining transmission of the first uplink transmission on the first symbol, in case that a transmission type of the first uplink transmission is one of the first transmission type; or,
obtaining second indication information from the network device, wherein the second indication information is used to indicate the terminal to transmit the first uplink transmission; and determining no transmission of the first uplink transmission on the first symbol, in case that a transmission type of the first uplink transmission is not one of the first transmission type.

In some embodiments, the first information includes the first resource information, the first resource information includes a first frequency domain offset threshold, which is a minimum frequency domain offset value between frequency domain resource(s) of the first uplink transmission and frequency domain resource(s) of the one or more SSBs;
the processor 600 is further configured to read the program to implement the following steps:
obtaining third indication information from the network device, wherein the third indication information is used to indicate the terminal to transmit the first uplink transmission; and determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold; or,
obtaining third indication information from the network device, wherein the third indication information is used to indicate the terminal to transmit the first uplink transmission; and determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold.

In some embodiments, the first information includes the first resource information, the first resource information includes a first frequency domain offset threshold, which is a minimum frequency domain offset value between frequency domain resource(s) of the first uplink transmission and frequency domain resource(s) of the one or more SSBs.

The processor 600 is further configured to read the program to implement the following steps:
obtaining fourth indication information from the network device, wherein the fourth indication information is used to indicate the terminal to transmit the first uplink transmission; obtaining SSB measurement configuration information from the network device; and determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold and SSB measurement is determined not to be carried out in accordance with the SSB measurement configuration information; or,
obtaining fourth indication information from the network device, wherein the fourth indication information is used to indicate the terminal to transmit the first uplink transmission; obtaining SSB measurement configuration information from the network device; and determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold and/or SSB measurement is determined to be carried out in accordance with the SSB measurement configuration information.

In some embodiments, the first resource information includes at least one of:
time domain resource information, which is used to indicate the first symbol for transmitting uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

In some embodiments, the processor 600 is further configured to read the program to implement the following steps:
obtaining fifth indication information from the network device, wherein the fifth indication information is used to indicate the terminal to transmit the first uplink transmission; and determining transmission of the first uplink transmission on the first symbol, in case that resource(s) corresponding to the first uplink transmission is within a range indicated by the first resource information; or,
obtaining fifth indication information from the network device, wherein the fifth indication information is used to indicate the terminal to transmit the first uplink transmission; and determining no transmission of the first uplink transmission on the first symbol, in case that resource(s) corresponding to the first uplink transmission is not within the range indicated by the first resource information.

In some embodiments, the first resource information includes the frequency domain resource information and/or the spatial domain resource information.

The processor 600 is further configured to read the program to implement the following steps:
obtaining fifth indication information from the network device, wherein the fifth indication information is used to indicate the terminal to transmit the first uplink transmission; obtaining SSB measurement configuration information from the network device; and determining transmission of the first uplink transmission on the first symbol, in case that resource(s) corresponding to the first uplink transmission is within a range indicated by the first resource information and SSB measurement is determined not to be carried out in accordance with the SSB measurement configuration information; or,
obtaining fifth indication information from the network device, wherein the fifth indication information is used to indicate the terminal to transmit the first uplink transmission; obtaining SSB measurement configuration information from the network device; and determining no transmission of the first uplink transmission on the first symbol, in case that resource(s) corresponding to the first uplink transmission is not within the range indicated by the first resource information and/or SSB measurement is determined to be carried out in accordance with the SSB measurement configuration information.

In some embodiments, the processor 600 is further configured to read the program to implement the following steps:
obtaining sixth indication information from the network device, wherein the sixth indication information is used to indicate the terminal to transmit the first uplink transmission; and determining transmission of the first uplink transmission on the first symbol, in case that a transmission type of the first uplink transmission is one of the first transmission type and resource(s) corresponding to the first uplink transmission is within a range indicated by the first resource information; or,
obtaining sixth indication information from the network device, wherein the sixth indication information is used to indicate the terminal to transmit the first uplink transmission; and determining no transmission of the first uplink transmission on the first symbol, in case that a transmission type of the first uplink transmission is not one of the first transmission type and/or resource(s) corresponding to the first uplink transmission is not within the range indicated by the first resource information.

In some embodiments, that the resource(s) corresponding to the first uplink transmission is within the range indicated by the first resource information, when the first resource information includes frequency domain resource information, includes at least one of the following:
the frequency domain resource(s) corresponding to the first uplink transmission is within a frequency domain resource set for transmitting the first uplink transmission, which is indicated by the first resource information;
a frequency domain offset value between frequency domain resource(s) corresponding to the first uplink transmission and frequency domain resource(s) of the one or more SSBs is greater than or equal to the second frequency domain offset threshold.

In some embodiments, the first uplink transmission includes at least one of the following: PUSCH, PUCCH, Physical Random Access Channel (PRACH), or an uplink reference signal.

It should be noted here that the above-mentioned apparatus provided by the embodiments of the present disclosure can implement all the method steps implemented by the above-mentioned method embodiments and can achieve the same technical effects. The parts in this embodiment that are the same as those in the method embodiments and the beneficial effects will not be specifically described again.

As shown in FIG. 7, the information processing apparatus of an embodiment of the present disclosure, which is applied to a terminal, includes:
a first determining unit 701, configured to determine first information; and
a second determining unit 702, configured to determine transmission of first uplink transmission or no transmission of first uplink transmission on a first symbol, in accordance with the first information;
wherein the first symbol is one or more SBFD symbols within symbols configured for where one or more SSBs are located; the first information includes at least one of: first transmission type; first resource information.

In some embodiments, the first determining unit is further configured to determine the first information in accordance with certain protocol(s).

In some embodiments, the first information includes the first resource information; the first determining unit is further configured to:
obtain first indication information from the network device, wherein the first indication information is used to indicate the first resource information; and
determine the first information in accordance with the first indication information.

In some embodiments, the first information includes the first transmission type and the first resource information; the first determining unit is further configured to:
determine the first transmission type in accordance with certain protocol(s); and
obtain first indication information from the network device, and determine the first resource information in accordance with the first indication information, wherein the first indication information is used to indicate the first resource information.

In some embodiments, the first transmission type includes at least one of:
one or more among (i) single-slot Physical Uplink Shared Channel (PUSCH) scheduled by Downlink Control Information (DCI), (ii) multiple-slot PUSCH scheduled by DCI, (iii) multiple-PUSCH transmission scheduled by DCI (iv) a first PUSCH transmission of multiple-PUSCH transmission scheduled by DCI, (v) repetition PUSCH transmission scheduled by DCI, (vi) a first PUSCH transmission of repetition PUSCH transmission scheduled by DCI, or (vii) Physical Uplink Control Channel (PUCCH) scheduled by DCI;
Aperiodic CSI Reporting activated or triggered by DCI and/or Semi-Persistent CSI Reporting transmitted on PUSCH;
Configured Grant (CG) Type-2 PUSCH and/or a first transmission opportunity of CG Type-2 PUSCH.

In some embodiments, the first transmission opportunity of CG Type-2 PUSCH includes at least one of the following:
a first transmission slot of the CG period determined in accordance with an activated DCI;
a first transmission of a first Transmission Block (TB) of the CG period determined in accordance with the activated DCI;
all repetition transmissions of the first TB of the CG period determined in accordance with the activated DCI.

In some embodiments, the first information includes the first transmission type; the second determining unit is further configured to:
obtain second indication information from the network device, wherein the second indication information is used to indicate the terminal to transmit the first uplink transmission; and determine transmission of the first uplink transmission on the first symbol, in case that a transmission type of the first uplink transmission is one of the first transmission type; or,
obtain second indication information from the network device, wherein the second indication information is used to indicate the terminal to transmit the first uplink transmission; and determine no transmission of the first uplink transmission on the first symbol, in case that a transmission type of the first uplink transmission is not one of the first transmission type.

In some embodiments, the first information includes the first resource information, the first resource information includes a first frequency domain offset threshold, which is a minimum frequency domain offset value between frequency domain resource(s) of the first uplink transmission and frequency domain resource(s) of the one or more SSBs;
the second determining unit is further configured to:
obtain third indication information from the network device, wherein the third indication information is used to indicate the terminal to transmit the first uplink transmission; and determine transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold; or,
obtain third indication information from the network device, wherein the third indication information is used to indicate the terminal to transmit the first uplink transmission; and determine no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold.

In some embodiments, the first information includes the first resource information, the first resource information includes a first frequency domain offset threshold, which is a minimum frequency domain offset value between frequency domain resource(s) of the first uplink transmission and frequency domain resource(s) of the one or more SSBs;
the second determining unit is further configured to:
obtain fourth indication information from the network device, wherein the fourth indication information is used to indicate the terminal to transmit the first uplink transmission; obtain SSB measurement configuration information from the network device; and determine transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold and SSB measurement is determined not to be carried out in accordance with the SSB measurement configuration information; or,
obtain fourth indication information from the network device, wherein the fourth indication information is used to indicate the terminal to transmit the first uplink transmission; obtain SSB measurement configuration information from the network device; and determine no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold and/or SSB measurement is determined to be carried out in accordance with the SSB measurement configuration information.

In some embodiments, the first resource information includes at least one of:
time domain resource information, which is used to indicate the first symbol for transmitting uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

In some embodiments, the second determining unit is further configured to:
obtain fifth indication information from the network device, wherein the fifth indication information is used to indicate the terminal to transmit the first uplink transmission; and determine transmission of the first uplink transmission on the first symbol, in case that resource(s) corresponding to the first uplink transmission is within a range indicated by the first resource information; or,
obtain fifth indication information from the network device, wherein the fifth indication information is used to indicate the terminal to transmit the first uplink transmission; and determine no transmission of the first uplink transmission on the first symbol, in case that resource(s) corresponding to the first uplink transmission is not within the range indicated by the first resource information.

In some embodiments, the first resource information includes the frequency domain resource information and/or the spatial domain resource information;
the second determining unit is further configured to:
obtain fifth indication information from the network device, wherein the fifth indication information is used to indicate the terminal to transmit the first uplink transmission; obtain SSB measurement configuration information from the network device; and determine transmission of the first uplink transmission on the first symbol, in case that resource(s) corresponding to the first uplink transmission is within a range indicated by the first resource information and SSB measurement is determined not to be carried out in accordance with the SSB measurement configuration information; or,
obtain fifth indication information from the network device, wherein the fifth indication information is used to indicate the terminal to transmit the first uplink transmission; obtain SSB measurement configuration information from the network device; and determine no transmission of the first uplink transmission on the first symbol, in case that resource(s) corresponding to the first uplink transmission is not within the range indicated by the first resource information and/or SSB measurement is determined to be carried out in accordance with the SSB measurement configuration information.

In some embodiments, the second determining unit is further configured to:
obtain sixth indication information from the network device, wherein the sixth indication information is used to indicate the terminal to transmit the first uplink transmission; and determine transmission of the first uplink transmission on the first symbol, in case that a transmission type of the first uplink transmission is one of the first transmission type and resource(s) corresponding to the first uplink transmission is within a range indicated by the first resource information; or,
obtain sixth indication information from the network device, wherein the sixth indication information is used to indicate the terminal to transmit the first uplink transmission; and determine no transmission of the first uplink transmission on the first symbol, in case that a transmission type of the first uplink transmission is not one of the first transmission type and/or resource(s) corresponding to the first uplink transmission is not within the range indicated by the first resource information.

In some embodiments, that the resource(s) corresponding to the first uplink transmission is within the range indicated by the first resource information, when the first resource information includes frequency domain resource information, includes at least one of the following:
the frequency domain resource(s) corresponding to the first uplink transmission is within a frequency domain resource set for transmitting the first uplink transmission, which is indicated by the first resource information;
a frequency domain offset value between frequency domain resource(s) corresponding to the first uplink transmission and frequency domain resource(s) of the one or more SSBs is greater than or equal to the second frequency domain offset threshold.

In some embodiments, the first uplink transmission includes at least one of the following: PUSCH, PUCCH, Physical Random Access Channel (PRACH), or an uplink reference signal.

It should be noted here that the above-mentioned apparatus provided by the embodiments of the present disclosure can implement all the method steps implemented by the above-mentioned method embodiments and can achieve the same technical effects. The parts in this embodiment that are the same as those in the method embodiments and the beneficial effects will not be specifically described again.

As shown in FIG. 8, the information processing apparatus of an embodiment of the present disclosure, which is applied to a network device, includes:
a first transmitting unit 801, configured to transmit first information to a terminal, wherein the first information is used to determine transmission of first uplink transmission or no transmission of first uplink transmission on a first symbol;
wherein the first symbol is one or more SBFD symbols within symbols configured for where one or more SSBs are located; the first information includes first resource information.

In some embodiments, the first resource information includes at least one of:
time domain resource information, which is used to indicate the first symbol for transmitting the uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

In some embodiments, the apparatus further includes:
a second transmitting unit, configured to transmit to the terminal second indication information, or third indication information, or fourth indication information, or fifth indication information, or sixth indication information, wherein the second indication information, or the third indication information, or the fourth indication information, or the fifth indication information, or the sixth indication information is used to indicate the terminal to transmit the first uplink transmission.

In some embodiments, the apparatus further includes:
a third transmitting unit, configured to transmit SSB measurement configuration information to the terminal.

In some embodiments, the first uplink transmission includes at least one of the following: PUSCH, PUCCH, PRACH, or an uplink reference signal.

It should be noted here that the above-mentioned apparatus provided by the embodiments of the present disclosure can implement all the method steps implemented by the above-mentioned method embodiments and can achieve the same technical effects. The parts in this embodiment that are the same as those in the method embodiments and the beneficial effects will not be specifically described again.

If the integrated units are implemented in the form of software functional units and sold or used as a standalone product, they may be stored in a processor-readable storage medium. Based on such an understanding, the technical solutions of the present disclosure essentially, or the part contributing to the prior art, or all or part of the technical solutions may be embodied in the form of a software product. The computer software product is stored in a storage medium and includes a plurality of instructions for causing a computing device (which may be a personal computer, a server, a network device, or the like) or a processor to perform all or part of the steps of the methods described in the various embodiments of the present disclosure. The aforementioned storage medium includes: a USB flash drive, a mobile hard disk, a Read-Only Memory (ROM), a Random Access Memory (RAM), a magnetic disk, an optical disk, or any other medium capable of storing program codes.

An embodiment of the present disclosure further provides a communication device, comprising: a memory, a processor, and a program stored on the memory and runnable on the processor, wherein the processor, when executing the program, implements the steps of the information processing method as described above.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

It should be noted that, in this document, terms such as "including," "comprising," or any other variations thereof are intended to cover non-exclusive inclusions, so that a process, method, item, or apparatus including a series of elements not only includes those elements, but also includes other elements not explicitly listed, or also includes elements inherent to such process, method, item, or apparatus. Without more restrictions, an element defined by the statement "including a..." does not exclude the existence of another identical element in the process, method, item, or apparatus including the element.

Through the description of the above embodiments, those skilled in the art can clearly understand that the methods in the above embodiments can be implemented by means of software plus the necessary general hardware platform. Of course, they can also be implemented by hardware, but in many cases, the former is a better implementation. Based on such understanding, the technical solutions of the present disclosure in essence or the part that contributes to the related technology can be embodied in the form of a software product, which is stored in a storage medium (such as ROM/RAM, magnetic disk, optical disk) and includes several instructions to cause a terminal (which can be a mobile phone, a computer, a server, an air conditioner, or a network device, etc.) to perform the methods described in the various embodiments of the present disclosure.

It should be noted that it should be understood that the division of the above various modules is only a logical function division. In actual implementation, they can be completely or partially integrated into one physical entity, or can be physically separated. These modules can all be implemented in the form of software called by processing elements; they can also all be implemented in the form of hardware; some modules can also be implemented in the form of software called by processing elements, and some modules are implemented in the form of hardware. For example, the determination module can be a separately established processing element, or it can be integrated into a certain chip of the above-mentioned apparatus for implementation. In addition, it can also be stored in the memory of the above-mentioned apparatus in the form of program code, and called and executed by a certain processing element of the above-mentioned apparatus to perform the function of the above-mentioned determination module. The implementation of other modules is similar. In addition, all or part of these modules can be integrated together or implemented independently. The processing element described here can be an integrated circuit with signal processing capabilities. In the implementation process, the steps of the above methods or the above various modules can be completed by hardware integrated logic circuits in the processor elements or instructions in the form of software.

For example, each module, unit, sub-unit, or sub-module may be one or more integrated circuits configured to implement the above methods, such as: one or more Application Specific Integrated Circuits (ASICs), one or more Digital Signal Processors (DSPs), or one or more Field Programmable Gate Arrays (FPGAs), etc. As another example, when a certain module above is implemented in the form of a processing element scheduling program codes, the processing element may be a general-purpose processor, such as a Central Processing Unit (CPU) or other processors capable of calling program codes. As another example, these modules may be integrated together and implemented in the form of a System-on-a-Chip (SoC).

The terms "first", "second", etc. in the description and claims of the present disclosure are used to distinguish similar objects and are not necessarily used to describe a specific order or sequence. It should be understood that the data so used can be interchanged under appropriate circumstances so that the embodiments of the present disclosure described herein can be implemented in orders other than those illustrated or described herein. In addition, the terms "including" and "having" and any variations thereof are intended to cover non-exclusive inclusions. In addition, "at least one of A and B" in this specification and claims should be understood as "only A, only B, or both A and B exist".

The embodiments of the present disclosure have been described above in conjunction with the accompanying drawings, but the present disclosure is not limited to the specific implementation manners described above. The above-mentioned specific implementation manners are only illustrative rather than restrictive. Those of ordinary skill in the art can also make many forms without departing from the purpose of the present disclosure and the protection scope of the claims under the inspiration of the present disclosure, all of which fall within the protection of the present disclosure.

## Claims

1. An information processing method, which is applied to a terminal, comprising:
determining first information; and
determining transmission of first uplink transmission or no transmission of first uplink transmission on a first symbol, in accordance with the first information,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises at least one of:
first transmission type;
first resource information.

2. The method according to claim 1, wherein the determining the first information comprises:
determining the first information in accordance with certain protocol(s).

3. The method according to claim 1, wherein the first information comprises the first resource information;
wherein the determining the first information comprises:
obtaining first indication information from a network device, wherein the first indication information is used to indicate the first resource information; and
determining the first information in accordance with the first indication information.

4. The method according to claim 1, wherein the first information comprises the first transmission type and the first resource information;
wherein the determining the first information comprises:
determining the first transmission type in accordance with certain protocol(s); and
obtaining first indication information from a network device, and determining the first resource information in accordance with the first indication information, wherein the first indication information is used to indicate the first resource information.

5. The method according to claim 2 or 4, wherein the first transmission type comprises at least one of:
one or more among (i) single-slot Physical Uplink Shared Channel (PUSCH) scheduled by Downlink Control Information (DCI), (ii) multiple-slot PUSCH scheduled by DCI, (iii) multiple-PUSCH transmission scheduled by DCI (iv) a first PUSCH transmission of multiple-PUSCH transmission scheduled by DCI, (v) repetition PUSCH transmission scheduled by DCI, (vi) a first PUSCH transmission of repetition PUSCH transmission scheduled by DCI, or (vii) Physical Uplink Control Channel (PUCCH) scheduled by DCI;
Aperiodic CSI Reporting activated or triggered by DCI and/or Semi-Persistent CSI Reporting transmitted on PUSCH;
Configured Grant (CG) Type-2 PUSCH and/or a first transmission opportunity of CG Type-2 PUSCH.

6. The method according to claim 5, wherein the first transmission opportunity of CG Type-2 PUSCH comprises at least one of the following:
a first transmission slot of the CG period determined in accordance with an activated DCI;
a first transmission of a first Transmission Block (TB) of the CG period determined in accordance with the activated DCI;
all repetition transmissions of the first TB of the CG period determined in accordance with the activated DCI.

7. The method according to claim 2, wherein the first information comprises the first transmission type;
wherein the determining transmission of first uplink transmission on the first symbol in accordance with the first information comprises:
obtaining second indication information from the network device, wherein the second indication information is used to indicate the terminal to transmit the first uplink transmission;
determining transmission of the first uplink transmission on the first symbol, in case that a transmission type of the first uplink transmission is one of the first transmission type, or,
wherein the determining no transmission of first uplink transmission on the first symbol in accordance with the first information comprises:
obtaining second indication information from the network device, wherein the second indication information is used to indicate the terminal to transmit the first uplink transmission;
determining no transmission of the first uplink transmission on the first symbol, in case that a transmission type of the first uplink transmission is not one of the first transmission type.

8. The method according to claim 2, wherein the first information comprises the first resource information, wherein the first resource information comprises a first frequency domain offset threshold, which is a minimum frequency domain offset value between frequency domain resource(s) of the first uplink transmission and frequency domain resource(s) of the one or more SSBs;
wherein the determining transmission of first uplink transmission on the first symbol in accordance with the first information comprises:
obtaining third indication information from the network device, wherein the third indication information is used to indicate the terminal to transmit the first uplink transmission;
determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold, or,
wherein the determining no transmission of first uplink transmission on the first symbol in accordance with the first information comprises:
obtaining third indication information from the network device, wherein the third indication information is used to indicate the terminal to transmit the first uplink transmission;
determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold.

9. The method according to claim 2, wherein the first information comprises the first resource information, wherein the first resource information comprises a first frequency domain offset threshold, which is a minimum frequency domain offset value between frequency domain resource(s) of the first uplink transmission and frequency domain resource(s) of the one or more SSBs;
wherein the determining transmission of first uplink transmission on the first symbol in accordance with the first information comprises:
obtaining fourth indication information from the network device, wherein the fourth indication information is used to indicate the terminal to transmit the first uplink transmission;
obtaining SSB measurement configuration information from the network device;
determining transmission of the first uplink transmission on the first symbol, in case that a frequency domain offset value between frequency domain resource(s) of the first uplink transmission and frequency domain resource(s) of the one or more SSBs is greater than or equal to the first frequency domain offset threshold and SSB measurement is determined not to be carried out in accordance with the SSB measurement configuration information, or,
wherein the determining no transmission of first uplink transmission on the first symbol in accordance with the first information comprises:
obtaining fourth indication information from the network device, wherein the fourth indication information is used to indicate the terminal to transmit the first uplink transmission;
obtaining SSB measurement configuration information from the network device;
determining no transmission of the first uplink transmission on the first symbol, in case that a frequency domain offset value between frequency domain resource(s) of the first uplink transmission and frequency domain resource(s) of the one or more SSBs is less than or equal to the first frequency domain offset threshold and/or SSB measurement is determined to be carried out in accordance with the SSB measurement configuration information.

10. The method according to claim 3 or 4, wherein the first resource information comprises at least one of:
time domain resource information, which is used to indicate the first symbol for transmitting uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

11. The method according to claim 10,
wherein the determining transmission of first uplink transmission on the first symbol in accordance with the first information comprises:
obtaining fifth indication information from the network device, wherein the fifth indication information is used to indicate the terminal to transmit the first uplink transmission;
determining transmission of the first uplink transmission on the first symbol, in case that resource(s) corresponding to the first uplink transmission is(are) within a range indicated by the first resource information, or,
wherein the determining no transmission of first uplink transmission on the first symbol in accordance with the first information comprises:
obtaining fifth indication information from the network device, wherein the fifth indication information is used to indicate the terminal to transmit the first uplink transmission;
determining no transmission of the first uplink transmission on the first symbol, in case that resource(s) corresponding to the first uplink transmission is(are) not within a range indicated by the first resource information.

12. The method according to claim 10, wherein the first resource information comprises the frequency domain resource information and/or the spatial domain resource information;
wherein the determining transmission of first uplink transmission on the first symbol in accordance with the first information comprises:
obtaining fifth indication information from the network device, wherein the fifth indication information is used to indicate the terminal to transmit the first uplink transmission;
obtaining SSB measurement configuration information from the network device;
determining transmission of the first uplink transmission on the first symbol, in case that resource(s) corresponding to the first uplink transmission is(are) within a range indicated by the first resource information and SSB measurement is determined not to be carried out in accordance with the SSB measurement configuration information, or,
wherein the determining no transmission of first uplink transmission on the first symbol in accordance with the first information comprises:
obtaining fifth indication information from the network device, wherein the fifth indication information is used to indicate the terminal to transmit the first uplink transmission;
obtaining SSB measurement configuration information from the network device;
determining no transmission of the first uplink transmission on the first symbol, in case that resource(s) corresponding to the first uplink transmission is(are) not within a range indicated by the first resource information and/or SSB measurement is determined to be carried out in accordance with the SSB measurement configuration information.

13. The method according to claim 10,
wherein the determining transmission of first uplink transmission on the first symbol in accordance with the first information comprises:
obtaining sixth indication information from the network device, wherein the sixth indication information is used to indicate the terminal to transmit the first uplink transmission;
determining transmission of the first uplink transmission on the first symbol, in case that a transmission type of the first uplink transmission is one of the first transmission type and resource(s) corresponding to the first uplink transmission is(are) within a range indicated by the first resource information, or,
wherein the determining no transmission of first uplink transmission on the first symbol in accordance with the first information comprises:
obtaining sixth indication information from the network device, wherein the sixth indication information is used to indicate the terminal to transmit the first uplink transmission;
determining no transmission of the first uplink transmission on the first symbol, in case that a transmission type of the first uplink transmission is not one of the first transmission type and/or resource(s) corresponding to the first uplink transmission is(are) not within a range indicated by the first resource information.

14. The method according to claim 11 or 12 or 13, wherein
the resource(s) corresponding to the first uplink transmission is(are) within the range indicated by the first resource information, when the first resource information comprises the frequency domain resource information, comprises at least one of the following:
the frequency domain resource(s) corresponding to the first uplink transmission is(are) within a frequency domain resource set for transmitting the first uplink transmission, which is indicated by the first resource information;
a frequency domain offset value between frequency domain resource(s) corresponding to the first uplink transmission and frequency domain resource(s) of the one or more SSBs is greater than or equal to the second frequency domain offset threshold.

15. The method according to claim 1, wherein the first uplink transmission comprises at least one of the following:
PUSCH, PUCCH, Physical Random Access Channel (PRACH), uplink reference signal.

16. An information processing method, which is applied to a network device, comprising:
transmitting first information to a terminal, wherein the first information is used to determine transmission of first uplink transmission or no transmission of first uplink transmission on a first symbol,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises first resource information.

17. The method according to claim 16, wherein the first resource information comprises at least one of:
time domain resource information, which is used to indicate the first symbol for transmitting uplink transmission;
frequency domain resource information, which is used to indicate frequency domain resource(s) for transmitting uplink transmission on the first symbol, or, is used to indicate a second frequency domain offset threshold, which is a minimum frequency domain offset value between frequency domain resource(s) of the first uplink transmission and frequency domain resource(s) of the one or more SSBs;
spatial domain resource information, which is used to indicate spatial domain resource(s) for transmitting uplink transmission on the first symbol.

18. The method according to claim 16, further comprising:
transmitting to the terminal second indication information, or third indication information, or fourth indication information, or fifth indication information, or sixth indication information,
wherein the second indication information, or the third indication information, or the fourth indication information, or the fifth indication information, or the sixth indication information is used to indicate the terminal to transmit the first uplink transmission.

19. The method according to claim 16, further comprising:
transmitting to the terminal SSB measurement configuration information.

20. The method according to claim 16, wherein the first uplink transmission comprises at least one of the following:
PUSCH, PUCCH, Physical Random Access Channel (PRACH), uplink reference signal.

21. An information processing apparatus, which is applied to a terminal, the information processing apparatus comprising a memory, a transceiver and a processor, wherein the memory is configured to store therein a computer program, and the transceiver is configured to transmit and receive data under the control of the processor, wherein the processor is configured to read the computer program in the memory so as to:
determine first information; and
determine transmission of first uplink transmission or no transmission of first uplink transmission on a first symbol, in accordance with the first information,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises at least one of:
first transmission type;
first resource information.

22. An information processing apparatus, which is applied to a network device, the information processing apparatus comprising a memory, a transceiver and a processor, wherein the memory is configured to store therein a computer program, and the transceiver is configured to transmit and receive data under the control of the processor, wherein the processor is configured to read the computer program in the memory, so as to:
transmit first information to a terminal, wherein the first information is used to determine transmission of first uplink transmission or no transmission of first uplink transmission on a first symbol,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises first resource information.

23. An information processing apparatus, which is applied to a terminal, comprising:
a first determining unit, configured to determine first information; and
a second determining unit, configured to determine transmission of first uplink transmission or no transmission of first uplink transmission on a first symbol, in accordance with the first information,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises at least one of:
first transmission type;
first resource information.

24. An information processing apparatus, which is applied to a network device, comprising:
a first transmitting unit, configured to transmit first information to a terminal, wherein the first information is used to determine transmission of first uplink transmission or no transmission of first uplink transmission on a first symbol,
wherein the first symbol is one or more Sub-Band Full Duplex (SBFD) symbols within symbols configured for where one or more Synchronization Signal and Physical Broadcast Channel (PBCH) blocks (SSBs) are located;
wherein the first information comprises first resource information.

25. A processor-readable storage medium storing therein a computer program, wherein the computer program is executed by a processor so as to implement the method according to any one of claims 1 to 20.
